# EUROPÄISCHE PATENTSCHRIFT

(11) **EP 3 702 498 B1**
(45) Veröffentlichungstag und Bekanntmachung des Hinweises auf die Patenterteilung: **10.05.2023**
(21) Anmeldenummer: 20158644.3
(22) Anmeldetag: 21.02.2020
(51) Int. Cl.: D01H 7/16, D01H 7/86

(54) **SPULENTOPFLAGERUNG**
SPINDLE POT BEARING
PALIER POUR POTS DE FILATURE

(30) Priorität: 28.02.2019 DE 102019105072
(43) Veröffentlichungstag der Anmeldung: 02.09.2020
(73) Patentinhaber: Saurer Technologies GmbH & Co. KG, 47804 Krefeld (DE)
(72) Erfinder: Pede-Vogler, Walter, 87471 Durach (DE); Scheitli, Otto, 87435 Kempten (DE); Becker, Fabian, 87448 Waltenhofen (DE)
(74) Vertreter: Morgenthum-Neurode, Mirko

(56) Entgegenhaltungen:
- DE-A1- 4 010 019
- DE-A1-102015 207 457
- DE-U1- 9 411 246

## Beschreibung

Die Erfindung betrifft eine Spulentopflagerung für eine Zwirnmaschine, insbesondere Doppeldrahtzwirnmaschine oder Kabliermaschine, umfassend einen Spulentopf mit einem Spulentopfboden und mit einer Lagerbuchse zur in Rotationsachsenrichtung formschlüssigen Verbindung eines Spulentopfbodens mit einer Spindel.

In der DE 40 10 019 A1 ist eine Spindel zum Herstellen eines Fadens beschrieben. Die Spindel zeichnet aus, dass im Bereich mindestens einer der beiden Umlenkstellen eine zum Spindelhohlschaft koaxiale und in Axialrichtung verschiebbare Hülse angeordnet ist, die mindestens mit einer seitlichen Öffnung versehen ist. An der Hülse greift einerseits ein Hülsenbetätigungselement und andererseits eine Stelleinrichtung für das die Betriebsweise und/oder den Fadenlauf beeinflussende Organ an. Damit ist es möglich, von außen mechanisch auf Funktionselemente oder Steuerorgane Einfluss zu nehmen, die im Bereich des Lieferspulenträgers angeordnet sind und während des ordnungsgemäßen Spindelbetriebes von dem bisher als undurchlässig angesehenen Fadenballon eingehüllt werden.

DE 94 11 246 U1 offenbart eine Vorrichtung zur Stromversorgung einer elektrisch steuerbaren Fadenbremse an einer Kablier- oder Doppeldrahtzwirnspindel, die einen Spindelrotor mit seitlicher Austrittsöffnung und einen ruhenden Spulenträger für eine Vorlagespule aufweist, der eine Lagerbüchse umfasst, die ein Rotoroberteil unter Zwischenschaltung van Wälzlagern konzentrisch umgibt, wobei das aus der Austrittsöffnung austretende Garn die Vorlagespule in einem Ballon umkreist und die Fadenbremse oder dergleichen innerhalb dieses Ballons angeordnet ist. Um eine einfache Stromversorgung zu ermöglichen sind in der Lagerbüchse die Statorwicklungen eines Generators und im Bereich derselben auf dem Rotoroberteil der Läufer des Generators angeordnet und von den Generatorwicklungen sind Stromleitungen entlang des Spulenträgers in den Bereich der Fadenbremse oder dergleichen geführt.

Durch die DE 10 2015 207 457 A1 ist eine Lagerbaugruppe offenbart, die bereits vor der Montage mit der Drehwelle eine Baueinheit bildet. Die Lagerbaugruppe umfasst ein Gehäuse mit zentralem Durchgangsloch, ein koaxial in dem zentralen Durchgangsloch montiertes erstes und zweites Lager sowie eine in Axialrichtung zwischen den beiden Lagern befindliche Wellenhülse. Das zweite Lager ist an einem Ende des Durchgangslochs positioniert, während das erste Lager sich am anderen Ende des Durchgangslochs befindet. Beide Lager weisen einen Innen- und einen Außenring sowie eine am anderen Ende des Durchgangslochs befindliche Endabdeckung auf, wobei die Endabdeckung mit dem Gehäuse einen Rastverschluss bildet und die Endabdeckung relativ zum Gehäuse drehbar ist.

Bekannte Zwirnmaschinen, insbesondere Doppeldrahtzwirnmaschinen oder Kabliermaschinen weisen eine auf einer Spindel angeordnete Lagerbuchse zur Aufnahme eines Spulentopfbodens eines Spulentopfs auf. Die bekannten Spulentopflagerungen verwenden dabei üblicherweise Lagerbuchsen aus einem Kautschukmaterial, dessen dämpfenden Materialeigenschaften Schwingungen, die durch die Rotation der Spindel entstehen, gegenüber dem Spulentopf dämpfen.

Um einen sicheren Betrieb der Zwirnmaschinen zu gewährleisten, ist eine in Längsachsenrichtung der Spindel betrachtet sichere Arretierung des auf der Spindel angeordneten Spulentopfs erforderlich. Entscheidend ist dabei, dass sowohl der Spulentopf gegenüber einem Abheben von der Lagerbuchse entgegen der Aufsetzrichtung als auch die Lagerbuchse gegenüber einem Abheben von den Lagerkörpern der Spindel gesichert ist. Bekannte Lagesicherungen, insbesondere der Lagerbuchse an dem Lagerkörper, basieren dabei auf dem Herstellen einer kraftschlüssigen Verbindung. Bei der Verarbeitung von insbesondere Zwirnen mit einem schweren Titer besteht jedoch die Gefahr, dass es unter anderem bei einem Ablauf des Garns zum Verhaken zwischen Garn und Spulentopf kommt, wodurch der Spulentopf aus seiner auf die Spindel aufgesteckten Position herausgezogen werden kann, sodass es nicht nur zu einer Unterbrechung des Zwirnprozesses, sondern auch zu Beschädigungen des Spulentopfes kommen kann.

Der Erfindung liegt die Aufgabe zugrunde, eine Spulentopflagerung für eine Zwirnmaschine, insbesondere Doppeldrahtzwirnmaschine oder Kabliermaschine bereitzustellen, welche eine zuverlässige Lagesicherung des Spulentopfs an der Spindel gewährleistet.

Die Erfindung löst die Aufgabe durch eine Spulentopflagerung mit den Merkmalen des Anspruchs 1. Vorteilhafte Weiterbildungen der Erfindung sind in den abhängigen Ansprüchen angegeben.

Für die erfindungsgemäße Spulentopflagerung für eine Zwirnmaschine, insbesondere Doppeldrahtzwirnmaschine oder Kabliermaschine umfassend einen Spulentopf mit einem Spulentopfboden ist eine Lagerbuchse zur in Rotationsachsenrichtung formschlüssigen Verbindung eines Spulentopfbodens mit einer Spindel vorgesehen, wobei
- ein erster Lagerabschnitt der Lagerbuchse zur in axialen Richtung formschlüssigen Verbindung mit einem an der Spindel angeordneten ersten Lagerkörper - in Längsachsenrichtung betrachtet - im Abstand von einem den ersten Lagerabschnitt begrenzenden Absatz von einer Innenseite der Lagerbuchse vorstehende, zwischen einer Verriegelungsstellung und einer Entriegelungsstellung bewegliche Rastvorsprünge aufweist,
- ein sich in Längsachsenrichtung an den ersten Lagerabschnitt anschließender zweiter Lagerabschnitt der Lagerbuchse zur in axialen Richtung arretierbaren formschlüssigen Verbindung mit dem Spulentopfboden ausgebildet ist und
- an dem Spulentopfboden ein in einer Betriebsposition des Spulentopfbodens die Rastvorsprünge in der Verriegelungsstellung festlegendes Verriegelungsmittel angeordnet ist.

Über den ersten Lagerabschnitt der Lagerbuchse erfolgt eine Verbindung der Lagerbuchse mit dem ersten an der Spindel angeordneten Lagerkörper. Die Lagerbuchse liegt dabei im montierten Zustand, d. h. in der Betriebsposition des Spulentopfbodens an der Spindel, in axialer Richtung mit einem den ersten Lagerabschnitt von dem zweiten Lagerabschnitt abgrenzenden Absatz an dem ersten, auf der Spindel angeordneten Lagerkörper an, wodurch eine Begrenzung der Aufschieberichtung der Lagerbuchse auf die Spindel bewirkt wird. Um eine entgegengesetzte Verschiebung, nämlich ein ungewolltes Abheben der Lagerbuchse von der Spindel zu verhindern, weist der erste Lagerabschnitt von einer Innenseite der Lagerbuchse vorstehende Rastvorsprünge auf, welche in ihrer Verriegelungsstellung den ersten Lagerkörper an der dem Absatz gegenüberliegenden Seite hintergreifen. Die Rastvorsprünge verhindern somit, dass die Lagerbuchse von der Spindel bzw. von dem mit der Spindel verbundenen Lagerkörper abgehoben, d. h. entgegen der Aufsteckrichtung bewegt werden kann. Die Rastvorsprünge sind dabei zwischen der Verriegelungsstellung, in der diese den Lagerkörper an der dem Absatz gegenüberliegenden Seite hintergreifen, und einer Entriegelungsverstellung beweglich, in welcher die Rastvorsprünge mit dem Lagerkörper außer Eingriff sind und so eine Entfernung der Lagerbuchse von dem Lagerkörper bzw. der Spindel ermöglichen.

Die Rastkörper gewährleisten in ihrer Verriegelungsstellung eine zuverlässige Lagesicherung der Lagerbuchse an dem ersten Lagerkörper der Spindel und verhindern somit zuverlässig ein ungewolltes Abheben der Lagerbuchse von der Spindel. Um eine zuverlässige Positionierung der Rastvorsprünge in der Verriegelungsstellung zu gewährleisten, ist dabei erfindungsgemäß vorgesehen, dass an dem Spulentopfboden ein Verriegelungsmittel angeordnet ist, das in der Betriebsposition, d. h. der montierten Position des Spulentopfbodens an der Lagerbuchse, die Rastvorsprünge in der Verriegelungsstellung festlegt. Die Festlegung über das Verriegelungsmittel erfolgt bspw. in der Weise, dass über das Verriegelungsmittel eine Verlagerung der Rastvorsprünge aus der Verriegelungsstellung in die Entriegelungsstellung blockiert wird. Das Verriegelungsmittel befindet sich dabei in der montierten Position des Spulentopfbodens an der Lagerbuchse in Wirkverbindung mit den Verriegelungsmitteln, sodass gewährleistet ist, dass während des Betriebs eine zuverlässige Lagesicherung der Lagerbuchse und eine zuverlässige Abhebesicherung besteht. Eine Entfernung des Spulentopfbodens aus der Betriebsposition, d. h. eine Verlagerung des Spulentopfbodens gegenüber der Lagerbuchse führt dazu, dass das Verriegelungsmittel die Rastvorsprünge derart freigibt, dass diese aus ihrer Verriegelungsstellung in die Entriegelungsstellung verlagert werden können, sodass ggf. ein Austausch der Lagerbuchse erfolgen kann.

Neben einer zuverlässigen Lagesicherung der Lagerbuchse an dem Lagerkörper weist die erfindungsgemäße Spulentopflagerung ferner eine abhebesichere Verbindung der Lagerbuchse mit dem Spulentopfboden auf. Hierzu ist der zweite Lagerabschnitt der Lagerbuchse, mit dem dieser an einem zweiten Lagerkörper anliegt, zur formschlüssigen Verbindung mit dem Spulentopfboden ausgebildet. Die formschlüssige Verbindung ist dabei derart ausgeführt, dass eine axiale Verlagerung des Spulentopfbodens gegenüber der Lagerbuchse durch geeignete, in axialer Richtung formschlüssig wirkende Mittel verhindert wird. Diese Mittel sind dabei in ihrer den Spulentopfboden formschlüssig festlegenden Position arretierbar, wodurch eine zuverlässige Lagesicherung des Spulentopfbodens an der Lagerbuchse gewährleistet wird. Die Ausgestaltung der formschlüssigen Verbindung des zweiten Lagerabschnitts mit dem Spulentopfboden kann dabei in beliebiger Weise ausgebildet sein, wobei neben einer direkten Verbindung von Spulentopfboden und Lagerbuchse auch eine formschlüssige Verbindung über geeignete, sowohl mit der Lagerbuchse als auch mit dem Spulentopfboden verbindbare Bauteile hergestellt werden kann.

Die erfindungsgemäße Spulentopflagerung gewährleistet in der Betriebsposition, d. h. bei einem auf der Spindel angeordneten Spulentopf, in zuverlässiger Weise, dass dieser gegen eine ungewollte axiale Verschiebung gegenüber der Spindel gesichert ist. Störungen im Betrieb sowie Beschädigungen des Spulentopfs können somit zuverlässig vermieden werden. Die Spulentöpfe sind stabil an der Spindel fixiert und können darüber hinaus werkzeuglos gewechselt, d. h. entfernt und anschließend wieder auf der Spindel arretiert werden.

Die Ausgestaltung sowie Anordnung der Rastvorsprünge ist grundsätzlich frei wählbar. Die Rastvorsprünge können durch einen umlaufenden Vorsprung oder aus mehreren Segmenten ausgebildet sein. Besonders bevorzugt sind diese dabei im Bereich der Stirnfläche des ersten Lagerabschnitts der Lagerbuchse angeordnet, wodurch sich die Lagerbuchse besonders kompakt und kostengünstig herstellen lässt. Nach einer besonders vorteilhaften Ausgestaltung der Erfindung ist vorgesehen, dass der erste Lagerabschnitt im Bereich der Rastvorsprünge von einer Außenseite der Lagerbuchse vorstehende Stützelemente aufweist. Bei den Stützelementen, bspw. radial nach außen vorstehende Stütznasen im Bereich der radial nach innen vorstehenden Rastvorsprünge erhöhen die Stützwirkung der mit dem ersten Lagerkörper in Eingriff befindlichen Rastvorsprünge und gewährleisten so in besonders zuverlässiger Weise eine Sicherung gegen axiale Verschiebung.

Die Ausgestaltung der Verlagerbarkeit der Rastvorsprünge ist grundsätzlich frei wählbar. So können hierzu bspw. beweglich-federbelastete Rastelemente oder O-Ringe verwendet werden, welche mit der Lagerbuchse verbunden sind. Nach einer vorteilhaften Ausgestaltung der Erfindung ist jedoch vorgesehen, dass der erste Lagerabschnitt die Rastvorsprünge in Umfangsrichtung begrenzende, in Längsachsenrichtung verlaufende Aussparungen aufweist.

Eine entsprechende Ausgestaltung des ersten Lagerabschnitts der Lagerbuchse erlaubt eine einstückige Ausgestaltung der Rastvorsprünge mit der Lagerbuchse, wobei durch die Aussparungen eine elastische Verstellbarkeit der Rastvorsprünge zwischen der Entriegelungsstellung und der Verriegelungsstellung erzielt wird. Diese Weiterbildung erlaubt somit eine besonders einfache und kostengünstige Ausgestaltung des ersten Lagerabschnitts. Die Aussparungen können beispielsweise schlitzförmig ausgebildet sein.

Zur Festlegung der Rastvorsprünge in deren Verriegelungsstellung an dem ersten Lagerkörper kann der Spulentopfboden grundsätzlich in beliebiger Weise ausgebildet sein. Nach einer vorteilhaften Ausgestaltung der Erfindung ist jedoch vorgesehen, dass das Verriegelungsmittel an dem Spulentopfboden durch einen an einer Unterseite des Spulentopfbodens angeordneten umlaufenden Steg gebildet ist, der in der Betriebsposition des Spulentopfbodens koaxial zum ersten Lagerabschnitt angeordnet, an der Außenseite des ersten Lagerabschnitts anliegt.

Der umlaufende, topfartig ausgestaltete Steg an der Unterseite des Spulentopfbodens weist eine ausreichende Stabilität auf, um bei seiner an der Außenseite der Lagerbuchse anliegenden Anordnung eine Verstellung der Rastvorsprünge in Richtung auf die Entriegelungsstellung zu blockieren. Bei einer einstückigen Ausgestaltung der Rastvorsprünge mit der Lagerbuchse verhindert der umlaufende Steg eine elastische Verstellung der Rastvorsprünge in Richtung auf die Entriegelungsstellung. Durch den umlaufenden Steg wird somit ein besonders einfaches Verriegelungsmittel bereitgestellt, durch das im Betrieb eine zuverlässige Anordnung der Rastvorsprünge in der Verriegelungsstellung gewährleistet wird.

Besonders vorteilhafterweise weist ferner die Außenseite des ersten Lagerabschnitts, mit welcher der nach einer vorteilhaften Weiterbildung vorgesehene Steg an der Unterseite des Spulentopfbodens in der Betriebsposition in Eingriff gelangt, einen konischen Verlauf auf. In Verbindung mit einem zylindrisch ausgestalteten Steg gewährleistet ein konischer Verlauf der Außenseite des ersten Lagerabschnitts, bei dem dieser bspw. um wenige Grad, insbesondere drei Grad gegenüber der Längsachse geneigt ist, dass beim Entfernen des Spulentopfbodens von der Lagerbuchse die Normalkraft zwischen dem Spulentopfboden und der Lagerbuchse kontinuierlich abnimmt, wodurch ein Abziehen der Lagerbuchse durch den Spulentopfboden besonders zuverlässig verhindert wird.

Die formschlüssige Verbindung zwischen dem zweiten Lagerabschnitt und dem Spulentopfboden kann, wie bereits an obiger Stelle ausgeführt, grundsätzlich in beliebiger Weise ausgestaltet sein. Nach einer besonders vorteilhaften Weiterbildung der Erfindung ist jedoch vorgesehen, dass der zweite Lagerabschnitt von der Außenseite vorstehende, bevorzugt durch sich in Längsachsenrichtung der Lagerbuchse erstreckende Schlitze unterbrochene, zwischen einer Verriegelungsstellung und einer Entriegelungsstellung verstellbare Rastvorsprünge aufweist, die mit einer in einer Aufnahmeöffnung des Spulentopfbodens angeordneten umlaufenden Nut in Eingriff bringbar sind.

Gemäß dieser Ausgestaltung der Erfindung weist der zweite Lagerabschnitt in analoger Weise zu dem ersten Lagerabschnitt Rastvorsprünge auf, welche besonders bevorzugt durch sich in Längsachsenrichtung der Lagerbuchse erstreckende Schlitze einstückig mit der Lagerbuchse ausgebildet sind. Die Rastvorsprünge sind dabei zwischen einer Verriegelungsstellung, in der sich die Rastvorsprünge in axialer Richtung in formschlüssiger Verbindung mit dem Spulentopfboden befinden und einer Entriegelungsstellung, in der diese formschlüssige Verbindung aufgehoben ist beweglich. Die Rastvorsprünge greifen dabei in der Betriebsposition in eine koaxial zur Längsachse der Lagerbuchse verlaufende Nut an der Innenseite einer Aufnahmeöffnung des Spulentopfbodens ein, die zur Anordnung der Lagerbuchse vorgesehen ist. Diese Ausgestaltung der Erfindung ermöglicht eine besonders einfache und kostengünstige Herstellung der Lagerbuchse und stellt zudem eine komfortable Möglichkeit zur Montage und Demontage des Spulentopfs an der Lagerbuchse dar.

Zur Arretierung der Rastvorsprünge in der Verriegelungsstellung ist dabei nach einer weiteren Ausgestaltung der Erfindung vorgesehen, dass der zweite Lagerabschnitt derart zu einer an der Innenseite der Lagerbuchse anliegenden Aufnahme eines Klemmkörpers, insbesondere einer Fadenbremse, ausgebildet ist, dass der Klemmkörper, insbesondere die Fadenbremse, die Rastvorsprünge des zweiten Lagerabschnitts in der Verriegelungsstellung arretiert. Durch die Anordnung einer an den Innendurchmesser des zweiten Lagerabschnitts angepassten Fadenbremse bzw. eines stopfenförmigen Klemmkörpers wird eine Verlagerung der Rastvorsprünge in Richtung auf die Entriegelungsstellung blockiert. Diese Ausgestaltung der Lagerbuchse, insbesondere die Verwendung einer Fadenbremse als Klemmkörper, ermöglicht eine besonders zuverlässige Lagesicherung des Spulentopfs an der Lagerbuchse, wobei Ausgestaltungen, wonach die Fadenbremse als Klemmkörper geeignet ist, es erlauben, bei solchen Zwirnmaschinen, welche Fadenbremsen verwenden, auf ergänzende Klemmkörper zu verzichten.

Nach einer weiteren Ausgestaltung der Erfindung ist vorgesehen, dass der zweite Lagerabschnitt - in Längsachsenrichtung betrachtet - im Bereich zwischen den Rastvorsprüngen und dem ersten Lagerabschnitt einen ringförmigen, von der Innenseite der Lagerbuchse vorstehenden Steg aufweist. Der Steg, welcher bspw. einstückig mit der Lagerbuchse ausgebildet ist, bildet eine mit einer Durchgangsöffnung versehene Verjüngung des Innenquerschnitts der Lagerbuchse, welcher jedoch eine ausreichend große Durchgangsöffnung für einen Fadenlauf bietet. Durch die durch den Steg erzielte Verjüngung innerhalb der Lagerbuchse kann der mit den Lagerkörpern in Kontakt stehende Bereich der Lagerbuchse, welcher bspw. mit Schmiermitteln belastet ist, gegenüber dem Faden und/ oder dem übrigen Bereich der Lagerbuchse abgetrennt werden, bspw. gegenüber dem Bereich, in dem nach einer vorteilhaften Weiterbildung der Erfindung eine Fadenbremse als Klemmkörper angeordnet ist. Im Falle einer zylindrischen Ausgestaltung der Innenfläche des zweiten Lagerabschnitts kann erforderlichenfalls, durch eine einfache Anpassung der Fadenbremse, eine zuverlässige Arretierung der Rastvorsprünge des zweiten Lagerabschnitts gewährleistet werden.

Nach einer weiteren Ausgestaltung der Erfindung weist die Spulentopflagerung zur formschlüssigen Verbindung mit dem Spulentopfboden eine auf die Lagerbuchse aufsteckbare und lösbar mit der Lagerbuchse verbindbare Verbindungshülse auf. Die Verwendung einer Verbindungshülse erlaubt eine besonders einfache Ausgestaltung der Lagerbuchse und verhindert in besonders zuverlässiger Weise den Austritt von Schmiermitteln, da an dem zweiten Lagerabschnitt auf eine Ausgestaltung mit Rastvorsprüngen, bspw. durch das Einbringen von Schlitzen, welche einen Schmiermitteldurchtritt erlauben würden, verzichtet werden kann. Die Ausgestaltung der Verbindung der Verbindungshülse mit der Lagerbuchse derart, dass diese in Längsachsenrichtung ortsfest aneinander arretiert sind, ist dabei grundsätzlich frei wählbar, wobei diese Verbindung derart ausgestaltet ist, dass zuverlässig gewährleistet ist, dass sich die Verbindungshülse im Betrieb nicht von der Lagerbuchse löst, was eine ungewollte axiale Verlagerung des Spulentopfs zur Folge hätte.

Nach einer vorteilhaften Ausgestaltung der Erfindung ist die Verbindungshülse über von einer Innenseite der Verbindungshülse vorstehende, einen Steg an der Innenseite der Lagerbuchse hintergreifende Haltekörper formschlüssig mit der Lagerbuchse verbindbar, wobei die Haltekörper zwischen einer Raststellung und einer Entnahmestellung verstellbar sind.

Diese Ausgestaltung der Erfindung sieht vor, dass die formschlüssige Verbindung zwischen der Verbindungshülse und der Lagerbuchse über an der Verbindungshülse angeordnete Haltekörper erfolgt, welche einen innenseitig von der Lagerbuchse vorstehenden Steg hintergreifen. Die Haltekörper sind dabei zwischen einer Rast- und einer Entnahmestellung verstellbar, sodass im Bedarfsfall die formschlüssig mit der Lagerbuchse verbundene Verbindungshülse von der Lagerbuchse entfernt werden kann. Die Ausgestaltung der Haltekörper kann dabei durch geeignete, hakenförmige Vorsprünge ausgeführt sein, welche in der montierten Lage der Verbindungshülse an der Lagerbuchse den Steg der Lagerbuchse hintergreifen. Bei einer Verlagerung der Vorsprünge in die Entriegelungsstellung gelangen diese mit dem umlaufenden Steg an der Innenseite der Lagerbuchse außer Eingriff, sodass die Verbindungshülse von der Lagerbuchse abgezogen werden kann. Besonders vorteilhafter Weise sind die Vorsprünge dabei elastisch ausgebildet und in der unbelasteten Position in Richtung auf die Raststellung vorgespannt, sodass bei einem Aufstecken der Verbindungshülse auf die Lagerbuchse eine selbsttätige Arretierung erfolgt.

Um in der montierten Lage der Verbindungshülse an der Lagerbuchse ein ungewolltes Trennen von Verbindungshülse und Lagerbuchse zu verhindern, ist nach einer vorteilhaften Weiterbildung der Erfindung vorgesehen, dass die Verbindungshülse derart zu einer an einer Innenseite der Verbindungshülse anliegenden Aufnahme eines Klemmkörpers, insbesondere einer Fadenbremse, ausgebildet ist, dass der Klemmkörper, insbesondere die Fadenbremse, die Haltekörper in der Raststellung arretiert. Der Klemmkörper, bzw. die Fadenbremse liegt dabei in der montierten Position an dem Spulentopf an einer Innenseite der Verbindungshülse an und verhindert damit eine Verlagerung der Haltekörper aus ihrer Raststellung in die Entnahmestellung, wobei die Klemmkörper bzw. die Fadenbremse sich bevorzugt im Bereich der Haltekörper vollumfänglich an der Innenseite der Verbindungshülse abstützt.

Um mit einer durch eine Verbindungshülse und Lagerbuchse gebildeten Spulentopflagerung ein Abheben des Spulentopfbodens von der Lagerbuchse, d. h. eine Verstellung entgegen der Aufsetzrichtung, zu verhindern, kann die Verbindungsbuchse grundsätzlich beliebig ausgebildet sein. Nach einer vorteilhaften Ausgestaltung ist jedoch vorgesehen, dass die Verbindungshülse einen auf einer Oberseite des Spulentopfbodens anordbaren Niederhalter, insbesondere einen umlaufenden Flansch aufweist. Gemäß dieser Ausgestaltung der Erfindung liegt der Niederhalter in der montierten Position des Spulentopfbodens an der Verbindungshülse und der Lagerbuchse mit einem radial von der Verbindungshülse vorstehenden Niederhalter, bevorzugt einem umlaufenden Flansch, auf einer Oberseite des Spulentopfbodens auf und arretiert somit den Spulentopfboden in axialer Richtung zwischen der Lagerbuchse, bevorzugt einem umlaufenden Absatz der Lagerbuchse, und dem Niederhalter, bevorzugt einem umlaufenden Flansch. Über den Niederhalter und die in axialer Richtung bestehende formschlüssige Verbindung von Lagerbuchse und Verbindungshülse wird eine zuverlässige Spulentopflagerung gebildet, bei der gewährleistet ist, dass der Spulentopfboden nicht von der Lagerbuchse abgezogen werden kann.

Nach einer weiteren Ausgestaltung der Spulentopflagerung ist vorgesehen, dass die Lagerbuchse an der Außenseite angeordnete Halteabschnitte aufweist, die zur lösbaren Arretierung von an der Verbindungshülse angeordneten Haltekörpern ausgebildet sind, wobei die Halteabschnitte und die Haltekörper derart ausgebildet sind, dass die Haltekörper beim Aufstecken der Verbindungshülse auf die Lagerbuchse selbsttätig mit den Halteabschnitten in eine Arretierungsposition gelangen und durch eine Relativbewegung der Verbindungshülse gegenüber der Lagerbuchse eine Verstellung der Haltekörper entlang der Halteabschnitte in eine Entnahmeposition erfolgt.

Gemäß dieser Ausgestaltung der Spulentopflagerung erfolgt eine Lagesicherung der Verbindungshülse an der Lagerbuchse in axialer Richtung, entgegen der Aufsteckrichtung der Verbindungshülse auf die Lagerbuchse, durch an der Außenseite der Lagerbuchse angeordnete Halteabschnitte, welche in der montierten Position mit Haltekörpern an der Verbindungshülse in Eingriff befindlich sind. Die Halteabschnitte und die Haltekörper sind dabei derart ausgebildet, dass beim Aufstecken der Verbindungshülse auf die Lagerbuchse in axialer Richtung die Haltekörper selbsttätig an den Halteabschnitten in eine Arretierungsposition gelangen. Die Ausgestaltung der Halteabschnitte ist dabei derart, dass zum Lösen der Verbindung von Verbindungshülse und Lagerbuchse die Verbindungshülse gegenüber der Lagerbuchse verdreht wird, wobei die Haltekörper an den Halteabschnitten verstellt werden, bis die Haltekörper in einen Abschnitt der Halteabschnitte gelangen, in der diese aus der dann eingenommenen Entnahmeposition von den Halteabschnitten abgezogen werden können.

Diese Ausgestaltung der Erfindung ermöglicht es, ohne zusätzliche Sicherungsmittel, bspw. Klemmmittel, eine sichere Arretierung der Verbindungshülse an der Lagerbuche zu gewährleisten. Einem versehentlichen Lösen der Verbindung aufgrund einer erhöhten, in Abzugsrichtung wirkenden axialen Belastungen auf die Verbindungshülse wird durch diese Ausgestaltung der Verbindung zuverlässig vorgebeugt. Eine Trennung von Verbindungshülse und Lagerbuchse erfordert zunächst eine definierte Verdrehung der Verbindungshülse gegenüber der Lagerbuchse, bei der die Haltekörper der Verbindungshülse in die Entnahmeposition gelangen. Erst eine derart gezielte Bewegung ermöglicht ein Abziehen der Verbindungshülse von der Lagerbuchse.

Eine Ausgestaltung der Lagerbuchse und der Verbindunghülse, durch die beim Aufstecken der Verbindungshülse eine selbsttätige Arretierung an den Halteabschnitten erfolgt und erst eine Verdrehung eine Entnahme der Verbindungshülse von der Lagerbuchse ermöglicht, ist grundsätzlich frei wählbar. Nach einer besonders vorteilhaften Ausgestaltung der Erfindung ist jedoch vorgesehen, dass die Haltekörper eine abgeschrägt zur Aufsteckrichtung verlaufende Anschlagfläche aufweisen, die beim Aufstecken mit einer korrespondierend abgeschrägt zur Aufsteckrichtung verlaufenden und sich in Aufsteckrichtung zur Außenseite der Lagerbuchse hin verjüngende Führungsflächen in Eingriff bringbar ist.

Gemäß dieser Ausgestaltung der Erfindung weisen die Haltekörper schräg zur Aufsteckrichtung verlaufende Anschlagflächen auf, die mit einer korrespondierenden Führungsfläche im Bereich der Halteabschnitte der Lagerbuchse in Eingriff gelangen. Durch die abgeschrägte Ausgestaltung der Haltekörper wird zunächst gewährleistet, dass die Verbindungshülse beim Aufstecken - in Umfangsrichtung betrachtet - derart verdreht mit der Lagerbuchse in Eingriff gelangt, dass die Haltekörper nach vollständigem Aufstecken in einem Bereich der Halteabschnitte angeordnet sind, in dem die Haltekörper an den Halteabschnitt arretiert sind.

Die sich zur Außenseite der Lagerbuchse hin verjüngenden Führungsflächen ermöglicht eine besonders einfache und zuverlässige Montage der Verbindungshülse an der Lagerbuchse. Dies ist insbesondere dann der Fall, wenn nach einer vorteilhaften Weiterbildung der Erfindung der der Halteabschnitt einen Rastabschnitt mit einem eine Rastfläche aufweisenden Absatz für einen Rastvorsprung an dem Haltekörper und einen durch eine schräg zur Längsachse an der Außenseite der Lagerbuchse verlaufenden Rampe gebildeten Entnahmeabschnitt aufweist. Beim Aufstecken werden die Haltekörper über die sich nach außen hin verjüngende Führungsfläche im Bereich des Rastabschnitts radial verlagert und dadurch kontrolliert über den Absatz geführt, bis der Rastvorsprung an dem Haltekörper an der Rastfläche des Absatzes anliegt. Die Verbindung von Rastfläche und Rastvorsprung blockiert zuverlässig eine axiale Verlagerung in Abzugsrichtung der Verbindungshülse von dem Lagekörper.

Zur Entnahme erfolgt eine Verdrehung der Verbindungshülse gegenüber der Lagebuchse, bei der die Rastvorsprünge in den Entnahmeabschnitt der Halteabschnitte gelangen, welche eine sich in Abzugsrichtung ansteigende Rampe aufweisen, wodurch die Rastvorsprünge von dem Halteabschnitt unter erneuter radialer Verlagerung abgezogen werden können, nachdem im Bereich der Entnahmeabschnitte die Rastvorsprünge außer Eingriff mit dem Absatz an dem Rastabschnitt befindlich sind.

Um eine besonders zuverlässige Verstellung der verdrehbaren Verbindungshülse gegenüber der Lagerbuchse zwischen dem Rastabschnitt und dem Entnahmeabschnitt zu gewährleisten, ist dabei nach einer besonders vorteilhaften Ausgestaltung der Erfindung vorgesehen, dass die Halteabschnitte durch Anschläge voneinander abgegrenzt sind, die eine verdrehbare Verstellung der Verbindungshülse zwischen der Arretierungsposition und der Entnahmeposition begrenzen. Durch die Anschläge wird somit zuverlässig gewährleistet, dass nach einer definierten, durch die Anschläge festgelegten Verdrehung, ausgehend aus dem Bereich des Rastabschnitts, die Rastvorsprünge der Haltekörper in der Entnahmeposition angeordnet sind, sodass dann durch eine entsprechende axiale Verlagerung die Verbindungshülse von der Lagerbuchse abgezogen werden kann. Eine über den Entnahmeabschnitt hinausgehende Verstellung der Haltekörper bei einer aus dem Rastabschnitt heraus erfolgenden Verdrehung wird durch diese Ausgestaltung der Erfindung zuverlässig verhindert, wodurch eine Demontage der Verbindungshülse von der Lagerbuchse in besonders einfacher Weise erfolgen kann.

Zur Begrenzung der Bewegung der Verbindungshülse auf die Lagerbuchse beim Aufstecken ist nach einer weiteren Ausgestaltung der Erfindung vorgesehen, dass die Lagerbuchse einen mit einer Anschlagfläche an der Verbindungshülse in Anlage bringbaren Endanschlag aufweist. Eine entsprechende Ausgestaltung gewährleistet eine besonders zuverlässige und einfache Montage und sichere Positionierung der Verbindungshülse an der Lagerbuchse, in der diese wiederum über geeignete Flächen den Spulentopfboden an der Lagerbuchse in axialer Richtung sichert.

Ausführungsbeispiele der Erfindung werden nachstehend mit Bezug auf die Zeichnungen erläutert. In den Zeichnungen zeigen:
- Figur 1: in einer Schnittansicht eine erste Ausführungsform einer Spulentopflagerung mit einer an einer Spindel angeordneten Lagerbuchse und einem an der Lagebuchse angeordneten Spulentopfboden;
- Figur 2: eine perspektivische Darstellung einer Schnittansicht der Lagerbuchse der Spulentopflagerung von Figur 1;
- Figur 3: in einer Schnittansicht eine zweite Ausführungsform einer Spulentopflagerung mit einer an einer Spindel angeordneten Lagerbuchse, einer an der Lagerbuchse angeordneten Verbindungshülse und einem an der Lagerbuchse und der Verbindungsbuchse angeordneten Spulentopfboden;
- Figur 4: in einer perspektivischen Ansicht eine Schnittdarstellung der Lagerbuchse und der Verbindungshülse von Figur 3 im montierten Zustand;
- Figur 5a: in einer perspektivischen Darstellung eine dritte Ausführungsform einer Spulentopflagerung mit einer Lagerbuchse und einer Verbindungshülse im demontierten Zustand;
- Figur 5b: in einer perspektivischen Darstellung die Verbindungsbuchse und die Lagerbuchse von Figur 5a in einer montierten, in einer Arretierungsposition befindlichen Stellung und
- Figur 5c: eine perspektivische Darstellung der Lagerbuchse und Verbindungsbuchse von Figur 5a in der montierten Lage zueinander in ihrer Entnahmeposition.

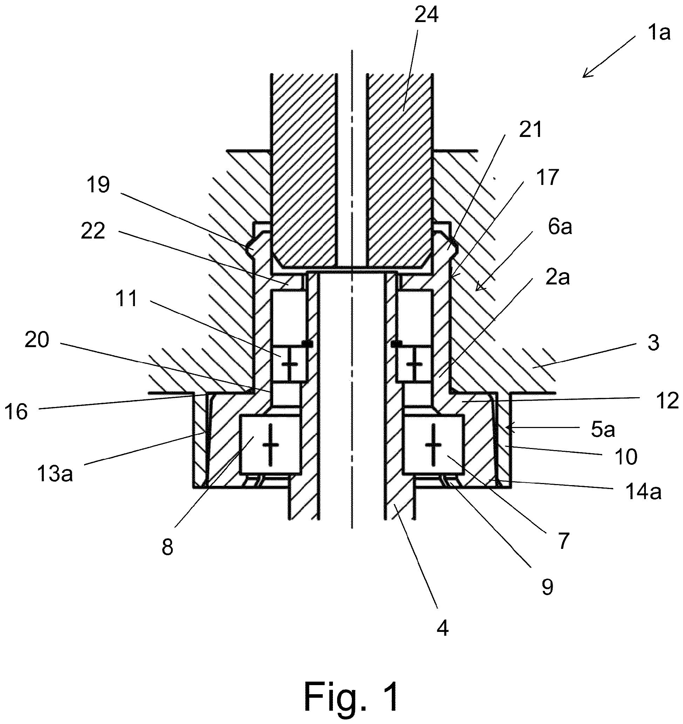

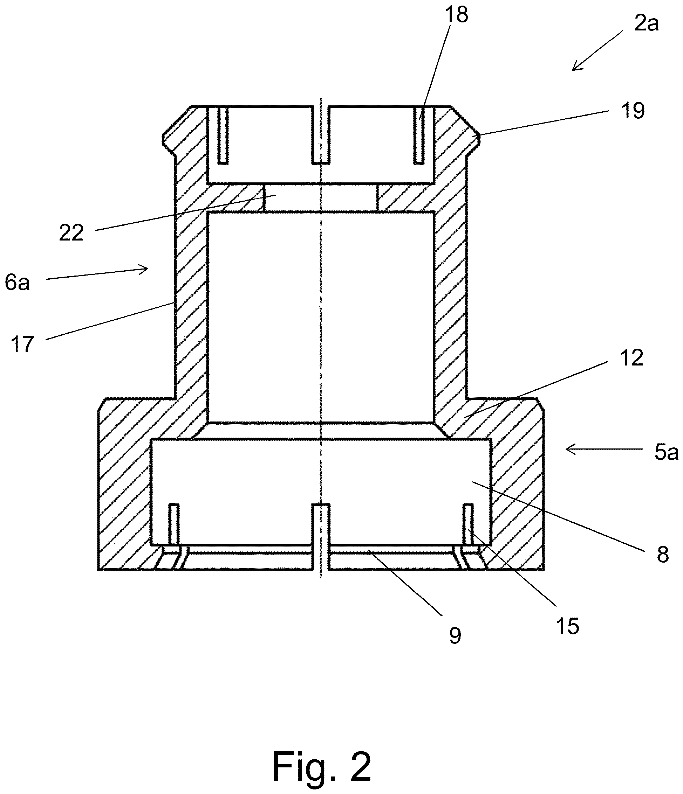

In Figur 1 ist eine aus einem Spulentopfboden 3 und einer in Figur 2 dargestellten Lagerbuchse 2a hergestellte Spulentopflagerung 1a dargestellt. Die Lagerbuchse 2a weist zu ihrer verdrehbaren Verbindung mit einem ersten Lagerkörper 7 und einem zweiten Lagerkörper 11 einer Spindel 4 einen ersten Lagerabschnitt 5a zur Verbindung mit dem ersten Lagerkörper 7 und einen zweiten Lagerabschnitt 6a zur Verbindung mit dem zweiten Lagerkörper 11 auf. In der in Figur 1 dargestellten Betriebsposition, in der die Lagerbuchse 2a in axialer Richtung formschlüssig mit dem ersten Lagerkörper 7 verbunden ist, liegt der erste Lagerabschnitt 5a mit einem Absatz 12 an einer Oberseite des ersten Lagerkörpers 7 an.

Zur Sicherung der in Figur 1 dargestellten Betriebsposition nach dem Aufstecken der Lagerbuchse 2a auf die Lagerkörper 11, 7 weist der erste Lagerabschnitt 5a an seinem dem zweiten Lagerabschnitt 6a gegenüberliegenden Ende von einer Innenseite 8 der Lagerbuchse 2a vorstehende Rastvorsprünge 9 auf, welche in der Betriebsposition den ersten Lagerkörper 7 an der dem Absatz 12 gegenüberliegenden Seite hintergreifen. Die Rastvorsprünge 9 sind dabei in über Umfangsrichtung verteilt an der Lagerbuchse 2a angeordnet und einstückig mit der Lagerbuchse 2a ausgebildet.

Um eine Verstellmöglichkeit der Rastvorsprünge 9 zwischen der in Figur 1 dargestellten Verriegelungsstellung der Rastvorsprünge 9 und einer Entriegelungsstellung, in der die Rastvorsprünge 9 mit dem Lagerkörper 7 außer Eingriff sind, zu ermöglichen, weist der erste Lagerabschnitt 5a Aussparungen 15 auf, die sich ausgehend von dem dem zweiten Lagerabschnitt 6a gegenüberliegenden Ende der Lagerbuchse 2a in deren Längsachsenrichtung erstrecken und eine mit der Lagerbuchse 2a einstückige Ausgestaltung der Rastkörper 9 erlauben.

Im Bereich der Außenseite 13a des ersten Lagerabschnitts 5a weist die Lagerbuchse 2a ferner - in radialer Richtung - den Rastvorsprüngen 9 gegenüberliegend angeordnete Stützelemente 14a auf, welche die Rastwirkung der Rastvorsprünge 9 unterstützten. Zur Sicherung der Position der Rastvorsprünge 9 in ihrer in Figur 1 dargestellten Verriegelungsstellung ist die Außenseite 13a des ersten Lagerabschnitts 5a in Kontakt mit einem von einer Unterseite 16 des Spulentopfbodens 3 vorstehenden Steg 10 in Eingriff, welcher als Verriegelungselement wirkt und eine elastische Verstellung der Rastvorsprünge 9 in die Entriegelungsstellung verhindert. In der Betriebsposition liegt der Steg 10 dabei koaxial an der Außenseite 13a des ersten Lagerabschnitts 5a der Lagerbuchse 2a an. In der dargestellten Position ist somit die Lagerbuchse 2a nach einem Aufstecken auf die Lagerkörper 7, 11 in der Betriebsposition gesichert.

Nach einer Anordnung der Lagerbuchse 2a an den Lagerkörpern 7, 11 erfolgt eine Positionierung des Spulentopfbodens 3 in der in Figur 1 dargestellten Betriebsposition. Zur Sicherung des Spulentopfbodens 3 an der Lagerbuchse 2a weist diese im Bereich des zweiten Lagerabschnitts 6a von einer Außenseite 17 des zweiten Lagerabschnitts 6a vorstehende Rastvorsprünge 19 auf. Die Rastvorsprünge 19 sind dabei einstückig mit der Lagerbuchse 2a ausgebildet und analog zu den Rastvorsprüngen 9 des ersten Lagerabschnitts 5a zwischen einer Entriegelungsstellung und einer Verriegelungsstellung verstellbar. Die Verstellbarkeit der einstückig mit der Lagerbuchse 2a ausgebildeten Rastvorsprünge 19 wird dabei durch sich in Längsachsenrichtung im Bereich des zweiten Lagerabschnitts 6a erstreckende Schlitze 18 erreicht, die sich ausgehend von einem dem ersten Lagerabschnitt 5a gegenüberliegenden Ende der Lagerbuchse 2a in Richtung auf den ersten Lagerabschnitt 5a erstrecken. In der Betriebsposition sind die Rastvorsprünge 19 in einer umlaufend in einer Aufnahmeöffnung 20 des Spulentopfs 3 eingebrachte Nut 21 angeordnet und sichern damit die Position des Spulentopfbodens 3 in axialer Richtung an der Lagerbuchse 2a. Zur Sicherung der Position der Rastvorsprünge 19 in der Nut 21 ist eine Fadenbremse 24 derart in die Lagerbuchse 2a einführbar, dass diese die Rastvorsprünge 19 in ihrer Verriegelungsstellung arretiert.

Ein Abziehen der Lagerbuchse 2a von der Spindel 4 oder einem Abziehen des Spulentopfbodens 3 von der Lagerbuchse 2a wird durch die dargestellte Spulentopflagerung 1 zuverlässig verhindert. Zur Demontage des Spulentopfbodens 3 ist es zunächst erforderlich, die Fadenbremse 24 aus dem ersten Lagerabschnitt 6a der Lagerbuchse 2a zu entfernen. Anschließend kann unter Biegung der Rastvorsprünge 19 der Spulentopfboden 3 von der Lagerbuchse 2a abgehoben werden, wobei eine konische, bevorzugt um 3° geneigte Außenseite 3a des ersten Lagerabschnitts 5a verhindert, dass beim Abheben des Spulentopfbodens 3 durch diesen die Lagerbuchse 2a von der Spindel 4 abgehoben wird, nachdem durch die konische Ausgestaltung beim Herabnehmen des Spulentopfbodens 3 die Normalkraft zwischen Spulentopfboden 3 und Lagerbuchse 2a kontinuierlich abnimmt.

Oberhalb des zweiten Lagerkörpers 11 ist ein umlaufender Steg 22 angeordnet, der von einer Innenseite 8 der Lagerbuchse 2a vorsteht. Der Steg 22 trennt den Bereich der Lagerbuchse 2a, in dem die Lagerkörper 7, 11 angeordnet sind, von dem sich hieran anschließenden, zur Aufnahme der Fadenbremse vorgesehenen Bereich, sodass der Bereich mit Schmiermitteln bei den Lagern 7, 11 von dem Bereich der Fadenbremse 24 getrennt ist.

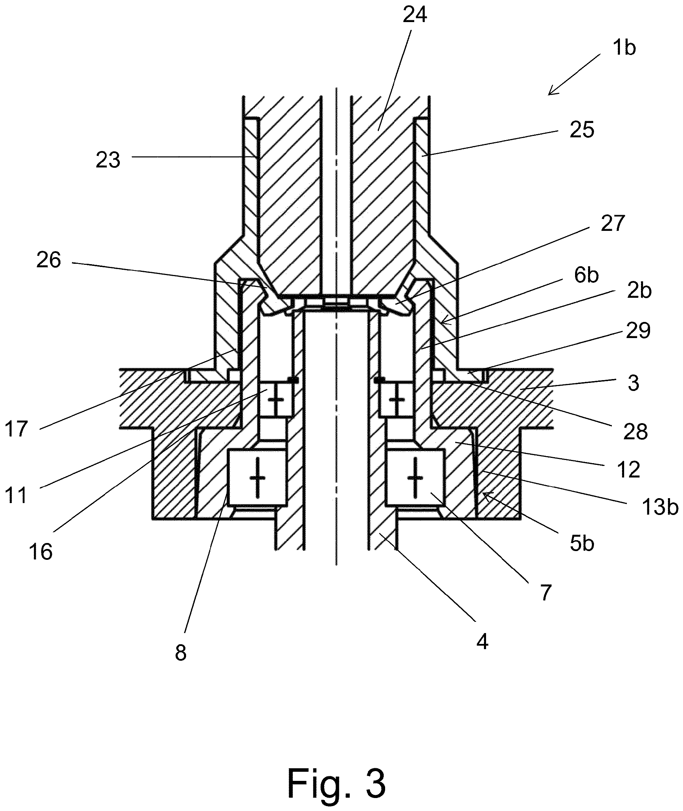

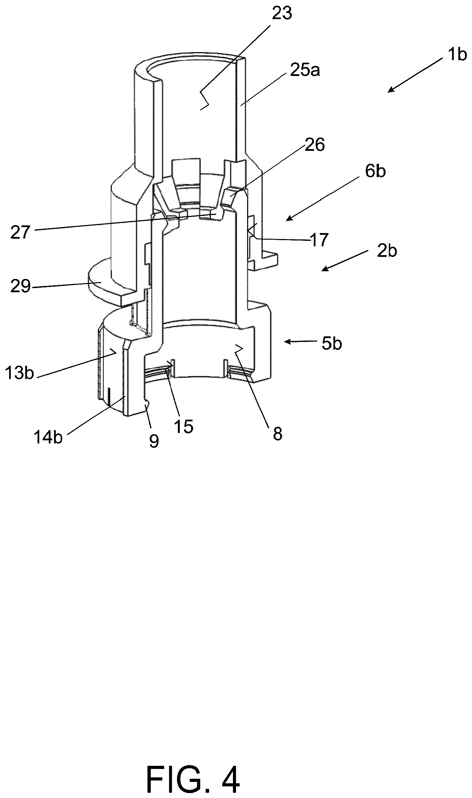

In der in den Figuren 3 und 4 dargestellten zweiten Ausführungsform der Spulentopflagerung 1b ist die Lagerbuchse 2b analog zu der in den Figuren 1 und 2 dargestellten Spulentopflagerung 1a an den Lagerkörpern 7, 11 der Spindel 4 angeordnet und durch den sich von der Unterseite 16 des Spulentopfbodens 3 erstreckenden Steg 10 gegen ein Abheben entgegen der Aufsteckrichtung der Lagerbuchse 2b gesichert.

Alternativ zu den bei der ersten Spulentopflagerung 1a vorgesehenen Rastvorsprüngen 19 zur Lagesicherung des Spulentopfbodens 3 an der Lagerbuchse 2a weist die Spulentopflagerung 1b in der in Figur 3 und 4 dargestellten Ausführungsform eine mit der Lagerbuchse 2b verbundene Verbindungshülse 25a auf. Zur Festlegung der Verbindungshülse 25a in axialer Richtung an der Lagerbuchse 2b weist die Verbindungshülse 25a sich von ihrer Innenseite 23 aus erstreckende Haltekörper 27 auf, welche zwischen der in Figur 3 dargestellten Raststellung und einer Entnahmestellung verstellbar sind.

In der Raststellung, in der die Verbindungshülse 25a über die Haltekörper 27 an der Lagerbuchse 2b gesichert ist, hintergreifen die Haltekörper 27 einen von einer Innenseite 8 der Lagerbuchse 2b vorstehenden Steg 26, welcher im Bereich des dem ersten Lagerabschnitt 5b gegenüberliegenden Endes der Lagerbuchse 2b angeordnet ist. Die Haltekörper 27 verlaufen dabei schräg zur Längsachsenrichtung und erlauben so eine komfortable Montage der Verbindungshülse 25a an der Lagerbuchse 2b, wobei die Haltekörper 27 beim Aufstecken der Verbindungsbuchse 25a an der Lagerbuchse 2b einrasten. Die einstückig mit der Verbindungshülse 25a ausgebildeten Haltekörper 27 sind aufgrund von Aussparungen, die die Haltekörper 27 voneinander abgrenzen, elastisch verlagerbar, sodass eine Demontage der Verbindungshülse 25a und der Verlagerung der Haltekörper 27 in die Entnahmestellung erfolgen kann.

Zur Lagesicherung der Haltekörper 27 in der in Figur 3 dargestellten Betriebsposition ist eine Fadenbremse 24 derart an der Verbindungshülse 25a angeordnet, dass diese an der Innenseite der Verbindungshülse 25a anliegt und damit eine Verlagerung der Haltekörper 27 in ihre Entnahmestellung blockiert.

Zur Lagesicherung des Spulentopfbodens 3 an der Lagerbuchse 2b und der Verbindungshülse 25a weist die Verbindungshülse 25a an ihrem - bezogen auf die Einbaulage - unteren Ende einen radial vorstehenden Flansch 29 auf, welcher als Niederhalter dient und auf einer Oberseite 28 des Spulentopfbodens 3 anliegt und den Spulentopfboden 3 in seiner Position an der Lagerbuchse 2b sichert. Zur Montage des Spulentopfbodens 3 an der Lagerbuchse 2b kann die Verbindungshülse 25a sowohl zuvor mit dem Spulentopfboden 3 verbunden sein oder aber lose vorliegen.

Im Falle einer nicht mit dem Spulentopfboden 3 verbundenen Verbindungshülse 25a erfolgt die Montage derart, dass nach dem Aufsetzen der Lagerbuchse 2b auf die Lagerkörper 7, 11 der Spulentopfboden 3 an der Lagerbuchse 2a montiert wird. Im Anschluss hieran wird die Verbindungshülse 25a auf die Lagerbuchse 2a aufgesteckt, bis die Haltekörper 27 den Steg 26 hintergreifen und der Flansch 29 auf der Oberseite 28 des Spulentopfbodens 3 anliegt. Die in der Verbindungshülse 25a angeordnete Fadenbremse 24 sperrt über ihre Außenkontur eine Verlagerung der Haltekörper 27 in ihre Entnahmestellung. Somit wird ein Abheben der Verbindungshülse 25a von der Lagerbuchse 2a verhindert und der an der Verbindungshülse 25a angebrachte Flansch 29 verhindert ein Abheben des Spulentopfbodens 3 von der Lagerbuchse 2a.

Alternativ kann die Verbindungshülse bspw. durch eine Schraub- oder Klebeverbindung bereits mit dem Spulentopfboden 3 verbunden sein. Auf die Lagerbuchse 2a wird dann die mit dem Spulentopfboden 3 verbundene Verbindungshülse 25a aufgesetzt. Bei der Montage gelangen gleichzeitig die Haltekörper 27 mit dem Steg 26 und die Rastvorsprünge 9 mit dem ersten Lagerkörper 5a in Eingriff und arretieren diese aneinander.

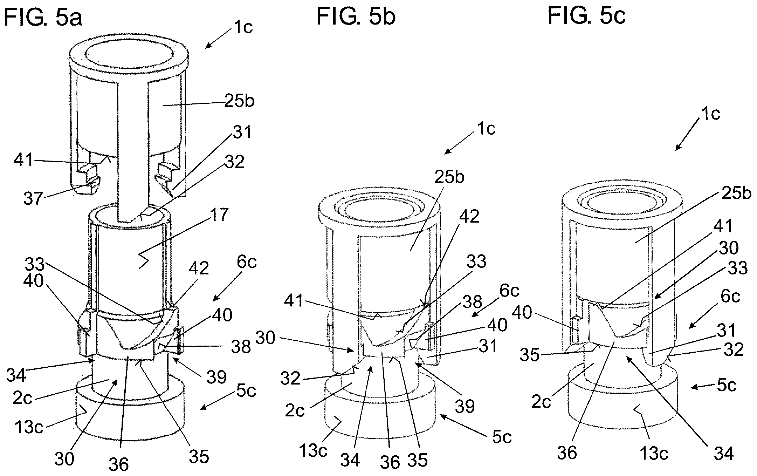

In den Figuren 5a bis 5c ist eine weitere Ausführungsform einer Spulentopflagerung 1c dargestellt. Zur Verbindung der Lagerbuchse 2c mit der Verbindungshülse 25b weist der zweite Lagerabschnitt 6c der Lagerbuchse 2c an seiner Außenseite 17 über den Umfang verteilte Halteabschnitte 30 auf. Die Halteabschnitte 30 besitzen einen von der Außenseite 17 der Lagerbuchse 2c vorstehende Absatz 36 zur Bildung einer Rastfläche 35, die sich senkrecht zur Außenseite 17 des zweiten Lagerabschnitts 6c erstreckt. Die einzelnen Halteabschnitte 30 sind durch senkrecht von den Absätzen 36 vorstehende Anschläge 40 voneinander getrennt. Neben den durch die Absätze 36 gebildeten Rastabschnitten 34 weisen die Halteabschnitte 30 jeweils einen sich in Umfangsrichtung an die Rastabschnitte 34 anschließenden Entnahmeabschnitt 39 auf. Die Entnahmeabschnitte 39 sind dabei als Rampen 38 ausgeformt, welche in Abziehrichtung der Verbindungshülse 25b von einer Außenseite 17 der Lagerbuchse 2c bis auf eine Oberseite des Absatzes 36 ansteigen.

Darüber hinaus weisen die Halteabschnitte 30 ferner schräg zur Aufschubrichtung verlaufende Führungsflächen 33 auf, welche sich in Aufschubrichtung der Verbindungshülse 25b in Richtung auf die Oberseite des Absatz 36 verjüngen.

Die Verbindungshülse 25b weist wiederum sich in Aufschiebrichtung erstreckende Haltekörper 31 mit Rastvorsprüngen 37 auf, welche in der Betriebsposition an einer Rastfläche 35 der Absätze 36 anliegen. Die Haltekörper 31 weisen zudem mit der Führungsfläche 33 in Eingriff bringbare, korrespondierend schräg verlaufende Anschlagflächen 32 auf.

Bei der Montage der Verbindungshülse 25b an der Lagerbuchse 2c, d. h. beim Aufstecken der Verbindungshülse 25b auf die Lagerbuchse 2c gelangen die Anschlagflächen 32 der Haltekörper 31 in Kontakt mit der Führungsfläche 33 an den Halteabschnitten 30. Durch das Zusammenwirken der Führungsfläche 33 mit der Anschlagfläche 32 werden die Haltekörper 31 nach einer radialen Verstellung in die in Figur 5b dargestellte Position geführt, in der die Rastvorsprünge 37 an der Rastfläche 35 und in Umfangsrichtung an den Anschlägen 40 anliegen.

Zum Lösen der Verbindung zwischen Verbindungshülse 25b und Lagerbuchse 2c sind zwei Schritte erforderlich. Zunächst muss die Verbindungshülse 25b in Richtung auf den die Rampe 38 aufweisenden Entnahmeabschnitt 39 verdreht werden, bis der Rastvorsprung 37 in den Entnahmeabschnitt 39 angeordnet ist. Im Bereich der Entnahmeabschnitte 39 ermöglicht die Rampe 38 ein Abziehen der Verbindungshülse 25b von der Lagerbuchse 2c, nachdem die Rastvorsprünge 37 nicht mehr an der Rastfläche 35 anliegen, sodass diese über die Rampe 38 unter radialer Verlagerung der Rastvorsprünge 37 von den Halteabschnitten 30 entfernt werden können.

In Aufschubrichtung ist die Verlagerung der Verbindungshülse 25b in Richtung auf die Lagerbuchse 2c durch einen an den Halteabschnitten 30 angeordneten Endanschlag 42 begrenzt. Dieser gelangt in einer Endlage, wenn die Verbindungsbuchse 25b vollständig auf der Lagerbuchse 2c aufgesteckt und in ihrer Betriebsposition befindlich ist, in Anlage mit einer Anschlagfläche 41 an der Verbindungsbuchse 2c.

### Bezugszeichenliste

- 1a, 1b, 1c: Spulentopflagerung
- 2a, 2b, 2c: Lagerbuchse
- 3: Spulentopfboden
- 4: Spindel
- 5a, 5b, 5c: erster Lagerabschnitt
- 6a, 6b, 6c: zweiter Lagerabschnitt
- 7: erster Lagerkörper
- 8: Innenseite Lagerbuchse
- 9: Rastvorsprünge
- 10: Verriegelungsmittel (Steg)
- 11: zweiter Lagerkörper
- 12: Absatz
- 13a, 13b, 13c: Außenseite (Lagerbuchse) erster Lagerabschnitt
- 14a, 14b: Stützelemente
- 15: Aussparung (erster Lagerabschnitt)
- 16: Unterseite Spulentopfboden
- 17: Außenseite zweiter Lagerabschnitt (Lagerbuchse)
- 18: Schlitz (zweiter Lagerabschnitt)
- 19: Rastvorsprünge (Außenseite zweiter Lagerabschnitt)
- 20: Aufnahmeöffnung (Spulentopfboden)
- 21: Nut
- 22: Steg
- 23: Innenseite Verbindungshülse
- 24: Fadenbremse
- 25a, 25b: Verbindungshülse
- 26: Steg
- 27: Haltekörper
- 28: Oberseite Spulentopfboden
- 29: Niederhalter/Flansch
- 30: Halteabschnitte
- 31: Haltekörper
- 32: Anschlagfläche Haltekörper
- 33: Führungsfläche
- 34: Rastabschnitt
- 35: Rastfläche
- 36: Absatz
- 37: Rastvorsprung
- 38: Rampe
- 39: Entnahmeabschnitt
- 40: Anschläge
- 41: Anschlagfläche
- 42: Endanschlag

## Patentansprüche

1. Spulentopflagerung (1) für eine Zwirnmaschine, insbesondere Doppeldrahtzwirnmaschine oder Kabliermaschine, umfassend einen Spulentopf mit einem Spulentopfboden (3) und mit einer Lagerbuchse (2a, 2b, 2c) zur in Rotationsachsenrichtung formschlüssigen Verbindung des Spulentopfbodens (3) mit einer Spindel (4), wobei
- ein erster Lagerabschnitt (5a, 5b, 5c) der Lagerbuchse (2a, 2b, 2c) zur in axialen Richtung formschlüssigen Verbindung mit einem an der Spindel (4) angeordneten ersten Lagerkörper (7) in Längsachsenrichtung im Abstand von einem den ersten Lagerabschnitt (5a, 5b, 5c) begrenzenden Absatz (12) von einer Innenseite (8) der Lagerbuchse (2a, 2b, 2c) vorstehende, zwischen einer Verriegelungsstellung und einer Entriegelungsstellung bewegliche Rastvorsprünge (9) aufweist,
- ein sich in Längsachsenrichtung an den ersten Lagerabschnitt (5a, 5b, 5c) anschließender zweiter Lagerabschnitt (6a, 6b, 6c) der Lagerbuchse (2a, 2b, 2c) zur in axialen Richtung arretierbaren formschlüssigen Verbindung mit dem Spulentopfboden (3) ausgebildet ist und
- an dem Spulentopfboden (3) ein in einer Betriebsposition des Spulentopfbodens (3) die Rastvorsprünge (9) in der Verriegelungsstellung festlegendes Verriegelungsmittel (10) angeordnet ist.

2. Spulentopflagerung (1) nach Anspruch 1, **dadurch gekennzeichnet, dass** der erste Lagerabschnitt (5a, 5b, 5c) im Bereich der Rastvorsprünge (9) von einer Außenseite (13a, 13b, 13c) der Lagerbuchse (2a, 2b, 2c) vorstehende Stützelemente (14a, 14b) aufweist.

3. Spulentopflagerung (1) nach Anspruch 1 oder 2, **dadurch gekennzeichnet, dass** der erste Lagerabschnitt (5a, 5b, 5c) die Rastvorsprünge (9) in Umfangsrichtung begrenzende, in Längsachsenrichtung verlaufende Aussparungen (15) aufweist.

4. Spulentopflagerung (1) nach einem oder mehreren der vorhergehenden Ansprüche, **dadurch gekennzeichnet, dass** das Verriegelungsmittel durch einen an einer Unterseite (16) des Spulentopfbodens (3) angeordneten umlaufenden Steg (10) gebildet ist, der in der Betriebsposition des Spulentopfbodens (3) koaxial zum ersten Lagerabschnitt (5a, 5b, 5c) angeordnet an der Außenseite (13a, 13b, 13c) des ersten Lagerabschnitts (5a, 5b, 5c) anliegt.

5. Spulentopflagerung (1) nach einem oder mehreren der vorhergehenden Ansprüche, **dadurch gekennzeichnet, dass** die Außenseite (13a, 13b, 13c) des ersten Lagerabschnitts (5a, 5b, 5c) einen konischen Verlauf aufweist.

6. Spulentopflagerung (1) nach einem oder mehreren der vorhergehenden Ansprüche, **dadurch gekennzeichnet, dass** der zweite Lagerabschnitt (6a) von der Außenseite (17) vorstehende, bevorzugt durch sich in Längsachsenrichtung der Lagerbuchse (2a) erstreckende Schlitze (18) unterbrochene, zwischen einer Verriegelungsstellung und einer Entriegelungsstellung bewegliche Rastvorsprünge (19) aufweist, die mit einer in einer Aufnahmeöffnung (20) des Spulentopfbodens (3) angeordneten umlaufenden Nut (21) in Eingriff bringbar sind.

7. Spulentopflagerung (1) nach Anspruch 6, **dadurch gekennzeichnet, dass** der zweite Lagerabschnitt (6a) in Längsachsenrichtung betrachtet, im Bereich zwischen den Rastvorsprüngen (19) und dem ersten Lagerabschnitt (5a) einen ringförmigen, von der Innenseite (8) der Lagerbuchse (2a) vorstehenden Steg (22) aufweist.

8. Spulentopflagerung (1) nach Anspruch 6, **dadurch gekennzeichnet, dass** der zweite Lagerabschnitt (6a) derart zu einer an der Innenseite (8) der Lagerbuchse (2a) anliegenden Aufnahme eines Klemmkörpers, insbesondere einer Fadenbremse (24), ausgebildet ist, dass der Klemmkörper, insbesondere die Fadenbremse (24), die Rastvorsprünge (19) des zweiten Lagerabschnitts (6a) in der Verriegelungsstellung arretiert.

9. Spulentopflagerung (1) nach einem oder mehreren der vorhergehenden Ansprüche, **gekennzeichnet durch** eine auf die Lagerbuchse (2b, 2c) aufsteckbare und lösbar mit der Lagerbuchse (2b, 2c) verbindbare Verbindungshülse (25a, 25b).

10. Spulentopflagerung (1) nach Anspruch 9, **dadurch gekennzeichnet, dass** die Verbindungshülse (25a) über von einer Innenseite (23) der Verbindungshülse (25a) vorstehende, einen Steg (26) an der Innenseite (8) der Lagerbuchse (2b) hintergreifende Haltekörper (27) formschlüssig mit der Lagerbuchse (2b) verbindbar ist, wobei die Haltekörper (27) zwischen einer Raststellung und einer Entnahmestellung verstellbar sind.

11. Spulentopflagerung (1) nach Anspruch 9, **dadurch gekennzeichnet, dass** die Verbindungshülse (25a) derart zu einer an einer Innenseite (23) der Verbindungshülse (25a) anliegenden Aufnahme eines Klemmkörpers, insbesondere einer Fadenbremse (24), ausgebildet ist, dass der Klemmkörper, insbesondere die Fadenbremse (24) die Haltekörper (27) in der Raststellung arretiert.

12. Spulentopflagerung (1) nach einem oder mehreren der Ansprüche 9 bis 11, **dadurch gekennzeichnet, dass** die Verbindungshülse (25a, 25b) einen auf einer Oberseite (28) des Spulentopfbodens (3) anordbaren Niederhalter, insbesondere einen umlaufenden Flansch (29) aufweist.

13. Spulentopflagerung (1) nach einem oder mehreren der vorhergehenden Ansprüche, **dadurch gekennzeichnet, dass** die Lagerbuchse (2c) an der Außenseite (17) angeordnete Halteabschnitte (30) aufweist, die zur lösbaren Arretierung von an der Verbindungshülse (25b) angeordneten Haltekörpern (31) ausgebildet sind, wobei die Halteabschnitte (30) und die Haltekörper (31) derart ausgebildet sind, dass die Haltekörper (31) beim Aufstecken der Verbindungshülse (25b) auf die Lagerbuchse (2c) selbsttätig mit den Halteabschnitten (30) in eine Arretierungsposition gelangen und durch eine Verdrehung der Verbindungshülse (25b) gegenüber der Lagerbuchse (2c) eine Verstellung der Haltekörper (31) entlang der Halteabschnitte (30) in die Entnahmeposition erfolgt.

14. Spulentopflagerung (1) nach Anspruch 13, **dadurch gekennzeichnet, dass** die Haltekörper (31) eine abgeschrägt zur Aufsteckrichtung verlaufende Anschlagfläche (32) aufweisen, die beim Aufstecken mit einer korrespondierend abgeschrägt zur Aufsteckrichtung verlaufenden und sich in Aufsteckrichtung zur Außenseite (13c) der Lagerbuchse (2c) hin verjüngende Führungsfläche (33) in Eingriff bringbar ist.

15. Spulentopflagerung (1) nach Anspruch 13 oder Anspruch 14, **dadurch gekennzeichnet, dass** der Halteabschnitt (30) einen Rastabschnitt (34) mit einem eine Rastfläche (35) aufweisenden Absatz (36) für einen Rastvorsprung (37) an dem Haltekörper (31) und einen durch eine schräg zur Längsachse an der Außenseite (17) der Lagerbuchse (2c) verlaufenden Rampe (38) gebildeten Entnahmeabschnitt (39) aufweist.

16. Spulentopflagerung (1) nach einem oder mehreren der Ansprüche 13 bis 15, **dadurch gekennzeichnet, dass** die Halteabschnitte (30) durch Anschläge (40) voneinander abgegrenzt sind, die eine verdrehbare Verstellung der Verbindungshülse (25b) zwischen der Arretierungsposition und der Entnahmeposition begrenzen.

17. Spulentopflagerung (1) nach einem oder mehreren der Ansprüche 9 bis 12, **dadurch gekennzeichnet, dass** die Lagerbuchse (2c) einen mit einer Anschlagfläche (41) an der Verbindungshülse (25b) in Anlage bringbaren Endanschlag (42) zur Begrenzung der Aufsteckbewegung der Verbindungshülse (25b) auf die Lagerbuchse (2c) aufweist.

## Claims

1. Spindle pot bearing (1) for a twisting machine, in particular a two-for-one twisting machine or cabling machine, comprising a spindle pot, which has a spindle pot base (3) and a bearing bush (2a, 2b, 2c) for connecting, in an interlocking manner in the direction of the axis of rotation, the spindle pot base (3) to a spindle (4), wherein
- a first bearing portion (5a, 5b, 5c) of the bearing bush (2a, 2b, 2c) for connecting, in an interlocking manner in the axial direction, to a first bearing member (7) arranged on the spindle (4) has, at a distance with respect to the direction of the longitudinal axis from a shoulder (12) limiting the first bearing portion (5a, 5b, 5c), latching protrusions (9) which protrude from an inside (8) of the bearing bush (2a, 2b, 2c) and are movable between a blocking position and an unblocking position,
- a second bearing portion (6a, 6b, 6c) of the bearing bush (2a, 2b, 2c), said second bearing portion (6a, 6b, 6c) adjoining the first bearing portion (5a, 5b, 5c) in the direction of the longitudinal axis, is designed for interlockingly connecting to the spindle pot base (3) in such a way that locking in the axial direction is possible, and
- a blocking means (10) is arranged on the spindle pot base (3), which blocking means (10) fixes the latching protrusions (9) in the blocking position when the spindle pot base (3) is in an operating position.

2. Spindle pot bearing (1) according to claim 1, **characterised in that**, in the region of the latching protrusions (9), the first bearing portion (5a, 5b, 5c) has supporting elements (14a, 14b) protruding from an outside (13a, 13b, 13c) of the bearing bush (2a, 2b, 2c).

3. Spindle pot bearing (1) according to either claim 1 or claim 2, **characterised in that** the first bearing portion (5a, 5b, 5c) has recesses (15), which limit the latching protrusions (9) in the circumferential direction and extend in the direction of the longitudinal axis.

4. Spindle pot bearing (1) according to one or more of the preceding claims, **characterised in that** the blocking means is formed by a circumferential ridge (10) arranged on an underside (16) of the spindle pot base (3), which ridge (10) abuts the outside (13a, 13b, 13c) of the first bearing portion (5a, 5b, 5c), while arranged coaxially to the first bearing portion (5a, 5b, 5c), when the spindle pot base (3) is in the operating position.

5. Spindle pot bearing (1) according to one or more of the preceding claims, **characterised in that** the outside (13a, 13b ,13c) of the first bearing portion (5a, 5b, 5c) has a conical shape.

6. Spindle pot bearing (1) according to one or more of the preceding claims, **characterised in that** the second bearing portion (6a) has latching protrusions (19) protruding from the outside (17), which are preferably interrupted by slots (18) extending in the direction of the longitudinal axis of the bearing bush (2a), are movable between a blocking position and an unblocking position and can be brought into engagement with a circumferential groove (21) arranged in a receiving opening (20) in the spindle pot base (3).

7. Spindle pot bearing (1) according to claim 6, **characterised in that** the second bearing portion (6a) has, in the region between the latching protrusions (19) and the first bearing portion (5a) with respect the direction of the longitudinal axis, an annular ridge (22) protruding from the inside (8) of the bearing bush (2a).

8. Spindle pot bearing (1) according to claim 6, **characterised in that** the second bearing portion (6a) is configured to receive a clamping member, in particular a thread brake (24), in such a way that the clamping member, in particular the thread brake (24), abuts the inside (8) of the bearing bush (2a) and locks the latching protrusions (19) of the second bearing portion (6a) in the blocking position.

9. Spindle pot bearing (1) according to one or more of the preceding claims, **characterised by** a connection sleeve (25a, 25b) that can be mounted on the bearing bush (2b, 2c) and can be releasably connected to the bearing bush (2b, 2c).

10. Spindle pot bearing (1) according to claim 9, **characterised in that** the connection sleeve (25a) can be interlockingly connected to the bearing bush (2b) by means of retaining members (27) that protrude from an inside (23) of the connection sleeve (25a) and engage behind a ridge (26) on the inside (8) of the bearing bush (2b), the retaining members (27) being movable between a latching position and a removal position.

11. Spindle pot bearing (1) according to claim 9, **characterised in that** the connection sleeve (25a) is configured to receive a clamping member, in particular a thread brake (24), in such a way that the clamping member, in particular the thread brake (24), abuts an inside (23) of the connection sleeve (25a) and locks the retaining members (27) in the latching position.

12. Spindle pot bearing (1) according to one or more of claims 9 to 11, **characterised in that** the connection sleeve (25a, 25b) has a hold-down device, in particular a circumferential flange (29), that can be arranged on a top side (28) of the spindle pot base (3).

13. Spindle pot bearing (1) according to one or more of the preceding claims, **characterised in that** the bearing bush (2c) has retaining portions (30), which are arranged on the outside (17) and are designed to releasably lock retaining members (31) arranged on the connection sleeve (25b), the retaining portions (30) and the retaining members (31) being designed such that the retaining members (31) automatically reach a locking position together with the retaining portions (30) when the connection sleeve (25b) is mounted onto the bearing bush (2c) and that the retaining members (31) are moved along the retaining portions (30) into the removal position by means of rotation of the connection sleeve (25b) relative to the bearing bush (2c).

14. Spindle pot bearing (1) according to claim 13, **characterised in that** the retaining members (31) have a stop surface (32), which extends obliquely to the mounting direction and can, upon mounting, be brought into engagement with a guide surface (33), which extends correspondingly obliquely to the mounting direction and tapers towards the outside (13c) of the bearing bush (2c) in the mounting direction.

15. Spindle pot bearing (1) according to either claim 13 or claim 14, **characterised in that** the retaining portion (30) has a latching portion (34) comprising a shoulder (36) for a latching protrusion (37) on the retaining member (31), the shoulder (36) having a latching surface (35), and the retaining portion (30) has a removal portion (39) formed by a ramp (38) extending obliquely to the longitudinal axis on the outside (17) of the bearing bush (2c).

16. Spindle pot bearing (1) according to one or more of claims 13 to 15, **characterised in that** the retaining portions (30) are delimited from one another by stops (40), which limit a rotational movement of the connection sleeve (25b) between the locking position and the removal position.

17. Spindle pot bearing (1) according to one or more of claims 9 to 12, **characterised in that** the bearing bush (2c) has an end stop (42), which can be brought into abutment with a stop surface (41) on the connection sleeve (25b), for limiting the mounting movement of the connection sleeve (25b) onto the bearing bush (2c).

## Revendications

1. Palier de pot à bobine (1) pour une machine à retordre, en particulier une machine à retordre à deux fils ou une machine de câblage, comprenant un pot à bobine avec un fond de pot à bobine (3) et avec un coussinet (2a, 2b, 2c) pour la liaison par complémentarité de forme dans le sens de l'axe de rotation du fond de pot à bobine (3) avec une broche (4), sachant que
- dans un premier tronçon de palier (5a, 5b, 5c) du coussinet (2a, 2b, 2c) pour la liaison par complémentarité de forme dans le sens de l'axe de rotation avec un premier corps porteur (7) agencé dans le sens de l'axe longitudinal an la broche (4) à distance d'un redan (12) limitant le premier tronçon de palier (5a, 5b, 5c) présente, d'une face intérieure (8) du coussinet (2a, 2b, 2c), entre une position de verrouillage une position de déverrouillage, des saillies d'arrêt mobiles (9),
- un deuxième tronçon de palier (6a, 6b, 6c) du coussinet (2a, 2b, 2c) dans le sens longitudinal sur le premier tronçon de palier (5a, 5b, 5c) est formé pour la liaison par complémentarité de force dans le sens axial avec le fond de pot à bobine (3) et
- sur le fond du pot à bobine (3), dans une position de fonctionnement du fond de pot à bobine (3), les saillies d'arrêt (9) sont agencées dans un moyen de verrouillage (10) déterminant dans la position de verrouillage.

2. Palier de pot à bobine (1) selon la revendication 1, **caractérisé en ce que** le premier tronçon de palier (5a, 5b, 5c) présente, des éléments de support (14a, 14b) dans la zone des saillies d'arrêt (9) d'une face extérieure (13a, 13b, 13c) du coussinet (2a, 2b, 2c).

3. Palier de pot à bobine (1) selon la revendication 1 ou 2, **caractérisé en ce que** le premier tronçon de palier (5a, 5b, 5c) présente des encoches (15) dans le sens de l'axe longitudinal limitant les saillies d'arrêt (9).

4. Palier de pot à bobine (1) selon une ou plusieurs des revendications précédentes, **caractérisé en ce que** le moyen de verrouillage (10) est formé par un chevalet sur le pourtour agencé sur une face inférieure (16) du fond de pot à bobine (3) et repose, en position de fonctionnement du fond de pot à bobine (3) de manière coaxiale avec le premier tronçon de palier (5a, 5b, 5c) agencé sur la face extérieure (13a, 13b, 13c) du premier tronçon de palier (5a, 5b, 5c).

5. Palier de pot à bobine (1) selon une ou plusieurs des revendications précédentes, **caractérisé en ce que** la face extérieure (13a, 13b, 13c) du premier tronçon de palier (5a, 5b, 5c) présente un cheminement conique.

6. Palier de pot à bobine (1) selon une ou plusieurs des revendications précédentes, **caractérisé en ce que** le deuxième tronçon de palier (6a) présente, dépassant de la face extérieure (17), de préférence par des fentes (18) s'étirant dans le sens de l'axe longitudinal du coussinet (2a), des saillies d'arrêt (19) mobiles interrompues, entre une position de verrouillage et une position de déverrouillage, pouvant entrer en empiétement avec une rainure (21) sur le pourtour agencée dans une ouverture de réception (20) du fond de pot à bobine (3).

7. Palier de pot à bobine (1) selon la revendication 6, **caractérisé en ce que** le deuxième tronçon de palier (6a) présente, vue dans le sens de l'axe longitudinal, un chevalet (22) annulaire dépassant, dans la zone entre les saillies d'arrêt (19) et le premier tronçon de palier (5a), de la face intérieure (8) du coussinet (2a).

8. Palier de pot à bobine (1) selon la revendication 6, **caractérisé en ce que** le deuxième tronçon de palier (6a) est formé de telle manière à recevoir un logement d'un corps de serrage posé sur la face inférieure (8) du coussinet (2a), en particulier d'un frein de fil (24) de manière à ce que le corps de serrage, en particulier le frein de fil (24) bloque les saillies d'arrêt (19) du deuxième tronçon de palier (6a) dans la position de verrouillage.

9. Palier de pot à bobine (1) selon une ou plusieurs des revendications précédentes, **caractérisé par** une douille de raccordement (25a, 25b) à raccorder pouvant être enfichée sur le coussinet (2b, 2c) et détachée avec le coussinet (2b, 2c).

10. Palier de pot à bobine (1) selon la revendication 9, **caractérisé en ce que** la douille de raccordement (25a) présente des corps de maintien (27) pouvant être raccordés par complémentarité de forme, sur la face intérieure (8) du coussinet (2b), avec le coussinet (2b) via un chevalet (26) dépassant de la faxe intérieure (23) du coussinet (25a), sachant que les corps de maintien (27) sont réglables entre une position d'arrêt et une position de prélèvement.

11. Palier de pot à bobine (1) selon la revendication 9, **caractérisé en ce que** la douille de raccordement (25a) est formée de telle manière à recevoir un logement d'un corps de serrage posé sur la face inférieure (23) de la douille de raccordement (25a), en particulier d'un frein de fil (24) de manière à ce que le corps de serrage, en particulier le frein de fil (24) bloque les corps de maintien (27) dans la position de verrouillage.

12. Palier de pot à bobine (1) selon une ou plusieurs des revendications 9 à 11, **caractérisé en ce que** la douille de raccordement (25a, 25b) présente un dispositif de retenue pouvant être agencé sur une face supérieure (28) du fond de pot à bobine (3), en particulier une bride (29) de pourtour.

13. Palier de pot à bobine (1) selon une ou plusieurs des revendications précédentes, **caractérisé en ce que** le coussinet (2c) présente des tronçons de support (30) agencés sur la face extérieure (17) formés pour le blocage amovible des corps de maintien (31) agencés sur la douille de raccordement (25b) sachant que les tronçons de support (30) et les corps de maintien (31) sont formé de manière à ce que les corps de maintien (31) parviennent d'eux-mêmes, lors de l'enfichage de la douille de raccordement (25b) sur le coussinet (2c) avec les tronçons de support (30) dans une position de blocage et que, par une rotation de la douille de raccordement (25b) par rapport au coussinet (2c) un décalage des corps de maintien (31) se produit le long des tronçons de support (30) dans la position de prélèvement.

14. Palier de pot à bobine (1) selon la revendication 13 **caractérisé en ce que** les corps de maintien (31) présentent une face de butée (32) allant de manière inclinée par rapport au sens d'enfichage laquelle peut entrer en empiètement lors de l'enfichage avec une surface de guidage (33) correspondante allant de manière inclinée par rapport au sens d'enfichage et se réduisant dans le sens de l'enfichage vers la face extérieure (13c) du coussinet (2c).

15. Palier de pot à bobine (1) selon la revendication 13 ou 14 **caractérisé en ce que** le tronçon de support (30) présente un tronçon d'arrêt (34) avec un redan (36) présentant une face d'arrêt (35) pour une saillie d'arrêt (37) sur le corps de maintien (31) et un tronçon de prélèvement (39) formant une rampe (38) allant de manière inclinée par rapport à l'axe longitudinal sur la face extérieure (17) du coussinet (2c).

16. Palier de pot à bobine (1) selon une ou plusieurs des revendications 13 à 15, **caractérisé en ce que** les tronçons de support (30) sont limités les uns des autres par des butées (40) qui limitent un décalage en rotation de la douille de raccordement (25b) entre la position de blocage et la position de prélèvement.

17. Palier de pot à bobine (1) selon une ou plusieurs des revendications 9 à 12, **caractérisé en ce que** le coussinet (2c) présente une butée d'extrémité (42) pouvant être amenée en position avec une face de butée (41) sur la douille de raccordement (25b) pour limiter le mouvement de détachement de la douille de raccordement (25b) sur le coussinet (2c).
